# EUROPEAN PATENT APPLICATION

(11) **EP 1 669 568 A1**
(43) Date of publication of application: **14.06.2006**
(21) Application number: 05026968.7
(22) Date of filing: 09.12.2005
(51) Int. Cl.: F01N 3/20, F01N 3/28, F01N 5/02, F01N 3/04, F28D 7/16, F28F 1/00

(54) **Exhaust gas heat exchanger for cogeneration system**

(30) Priority: 10.12.2004 KR 2004104370
(71) Applicant: LG Electronics, Inc., Seoul 150-010 (KR)
(72) Inventor: Ha, Sim Bok, Kwamgmyung-si, Kyungki-do 423-010 (KR); Chung, Baik Young , 304-1902 Doosan Apt., Kyeyang-ku,Inchum-si 407-710 (KR); Ko, Cheol Soo, Kunpo-si, Kyungki-do 435-040 (KR); Kim, Cheol Min, Manan-ku,Anyang-si kyungki-do430-042 (KR)
(74) Representative: Vossius & Partner

(57) **Abstract**

An exhaust gas heat exchanger for a cogeneration system is disclosed which includes exhaust gas discharge tubes (80, 93, 103, 113 or 120) each including a bellows tube portion (83, 94, 104, or 114) formed at at least a portion of the exhaust gas discharge tube to enable the exhaust gas discharge tube to be thermally expanded and shrunken, so that it is possible to prevent the exhaust gas discharge tube from being damaged due to repeated thermal expansion and shrinkage thereof caused by hot exhaust gas passing through the exhaust gas discharge tube. Accordingly, an enhancement in durability and reliability is achieved (Fig. 5).

## Description

The present invention relates to an exhaust gas heat exchanger for a cogeneration system, and, more particularly, to an exhaust gas heat exchanger for a cogeneration system which includes exhaust gas discharge tubes each having a thermally expandable and shrinkable bellows structure such that the exhaust gas discharge tubes are prevented from being damaged due to thermal expansion and shrinkage thereof caused by hot exhaust gas, thereby being capable of achieving an enhancement in durability, an increase in heat transfer area, and an enhancement in heat transfer efficiency according to the increased heat transfer area.

In general, cogeneration systems are adapted to generate both electricity and heat from a single energy source.

Such a cogeneration system can recover heat of exhaust gas or waste heat of cooling water generated from an engine or turbine during an electricity generation operation, so that the cogeneration system can achieve an increase in energy efficiency of 70 to 80% over other systems. By virtue of such an advantage, the cogeneration system has recently been highlighted as an electricity and heat supply source for buildings. In particular, the cogeneration system exhibits highly-efficient energy utilization in that the recovered waste heat is mainly used to heat/cool a confined space and to heat water.

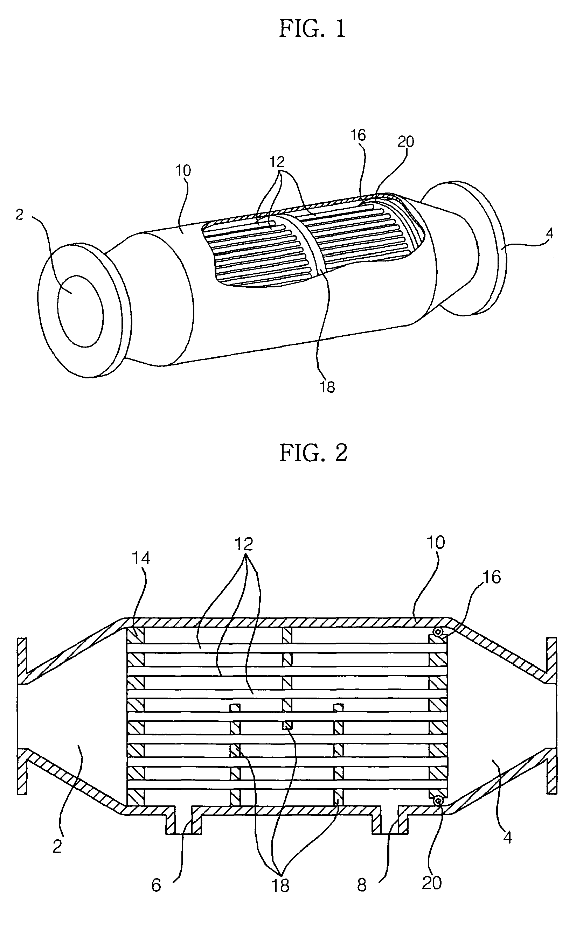

FIG. 1 is a partially-broken perspective view illustrating a conventional exhaust gas heat exchanger. FIG. 2 is a cross-sectional view illustrating the conventional exhaust gas heat exchanger.

As shown in FIGS. 1 and 2, the conventional exhaust gas heat exchanger includes a shell 10 which includes an exhaust gas inlet 2 and an exhaust gas outlet 4 to allow exhaust gas discharged from an engine (not shown) to pass through the shell 10. The shell 10 also includes a cooling water inlet 6 and a cooling water outlet 8 formed through a peripheral wall of the shell 10. The exhaust gas heat exchanger also includes a plurality of exhaust gas discharge tubes 12 which are arranged in the shell 10 to define exhaust gas passages, respectively, first and second isolation plates 14 and 16 which are arranged at the exhaust gas inlet 2 and exhaust gas outlet 4, respectively, to isolate the exhaust gas from a cooling water path defined in the shell 10, and a flow guide 18 which is arranged in the shell 10 to change the cooling water path.

The exhaust gas discharge tubes 12 form a cylindrical tube bundle. Each exhaust gas discharge tube 12 has opposite ends respectively fitted in associated through holes formed through the first and second isolation plates 14 and 16.

The first isolation plate 14 is fixed to an inner peripheral surface of the shell 14 by welding. An O-ring 20 is fitted between the peripheral surface of the second isolation plate 16 and the inner peripheral surface of the shell 10, taking into consideration thermal expansion of the exhaust gas discharge tubes 12 caused by high-temperature heat of the exhaust gas.

Hereinafter, operation of the conventional exhaust gas heat exchanger having the above-mentioned configuration will be described.

Exhaust gas discharged from the engine (not shown) passes through the exhaust gas inlet 2, exhaust gas discharge tubes 12, and exhaust gas outlet 4, in this order.

As the exhaust gas passes through the exhaust gas discharge tubes 12, heat transfer occurs between cooling water, which is introduced into the shell 10 through the cooling water inlet 6, and the exhaust gas tubes 12.

Thus, the cooling water is discharged from the shell 10 after absorbing heat from the exhaust gas, and the exhaust gas is discharged after releasing heat to the cooling water.

In the conventional exhaust gas heat exchanger, which is used in a cogeneration system, however, repeated heat expansion and shrinkage occur due to the high-temperature exhaust gas, so that the O-ring 20 may be worn. When the O-ring 20 is worn, the cooling water leaks toward the exhaust gas outlet 4, thereby causing essential elements of the cogeneration system, for example, the engine, to be damaged.

The present invention has been made in view of the above-mentioned problems, and it is an object of the invention to provide an exhaust gas heat exchanger for a cogeneration system which includes exhaust gas discharge tubes each having a bellows structure, thereby being capable of preventing the exhaust gas discharge tubes are prevented from being damaged due to thermal deformation thereof, and preventing cooling water from leaking.

In accordance with the present invention, this object is accomplished by providing an exhaust gas heat exchanger for a cogeneration system comprising: a shell; an exhaust gas path which is defined in the shell to guide exhaust gas to pass through the shell; and a refrigerant path which is defined in the shell to guide a refrigerant to pass through the shell such that the refrigerant heat-exchanges with the exhaust gas path, wherein the exhaust gas path includes exhaust gas passages respectively defined by exhaust gas discharge tubes each including a bellows tube portion formed at at least a portion of the exhaust gas discharge tube to enable the exhaust gas discharge tube to be thermally expanded and shrunken.

The bellows tube portion may be longitudinally pleated in a longitudinal direction of the exhaust gas discharge tube.

The bellows tube portion may be pleated in a circumferential direction of the exhaust gas discharge tube.

The bellows tube portion may include circular pleats.

The bellows tube portion may include a spiral pleat.

The exhaust gas heat exchanger may further comprise an exhaust gas inlet and an exhaust gas outlet respectively formed at opposite ends of the shell to allow the exhaust gas to pass through the shell. The exhaust gas discharge tubes may connect the exhaust gas inlet and the exhaust gas outlet.

Each exhaust gas discharge tube may further include a constant-diameter cylindrical tube portion. The bellows tube portion may be arranged toward the exhaust gas inlet, and the constant-diameter cylindrical tube portion may be arranged toward the exhaust gas outlet.

The exhaust gas heat exchanger may further comprise a refrigerant inlet and a refrigerant outlet which are formed through a peripheral wall of the shell.

The exhaust gas heat exchanger may further comprise a first isolation plate and a second isolation plate which are arranged in the shell to isolate the exhaust gas inlet and the exhaust gas outlet from each other, thereby defining the refrigerant path.

The exhaust gas heat exchanger may further comprise at least one flow guide adapted to change the refrigerant path.

The above objects, and other features and advantages of the present invention will become more apparent after reading the following detailed description when taken in conjunction with the drawings, in which:
FIG. 1 is a partially-broken perspective view illustrating a conventional exhaust gas heat exchanger;
FIG. 2 is a cross-sectional view illustrating the conventional exhaust gas heat exchanger;
FIG. 3 is a schematic view illustrating a configuration of a cogeneration system according to a first embodiment of the present invention;
FIG. 4 is a partially-broken perspective view illustrating an exhaust gas heat exchanger used in the cogeneration system according to the first embodiment of the present invention;
FIG. 5 is a cross-sectional view illustrating an inner configuration of the exhaust gas heat exchanger according to the first embodiment of the present invention;
FIG. 6 is a cross-sectional view illustrating an inner configuration of an exhaust gas heat exchanger in a cogeneration system according to a second embodiment of the present invention;
FIG. 7 is a cross-sectional view illustrating an inner configuration of an exhaust gas heat exchanger in a cogeneration system according to a third embodiment of the present invention;
FIG. 8 is a cross-sectional view illustrating an inner configuration of an exhaust gas heat exchanger in a cogeneration system according to a fourth embodiment of the present invention; and
FIG. 9 is a cross-sectional view illustrating an inner configuration of an exhaust gas heat exchanger in a cogeneration system according to a fifth embodiment of the present invention.

Hereinafter, exemplary embodiments of an exhaust gas heat exchanger and a cogeneration system using the exhaust gas heat exchanger in accordance with the present invention will be described with reference to the annexed drawings.

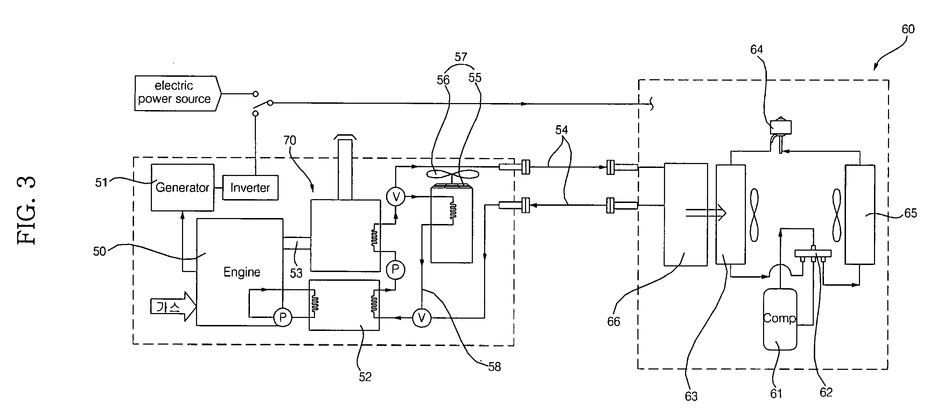

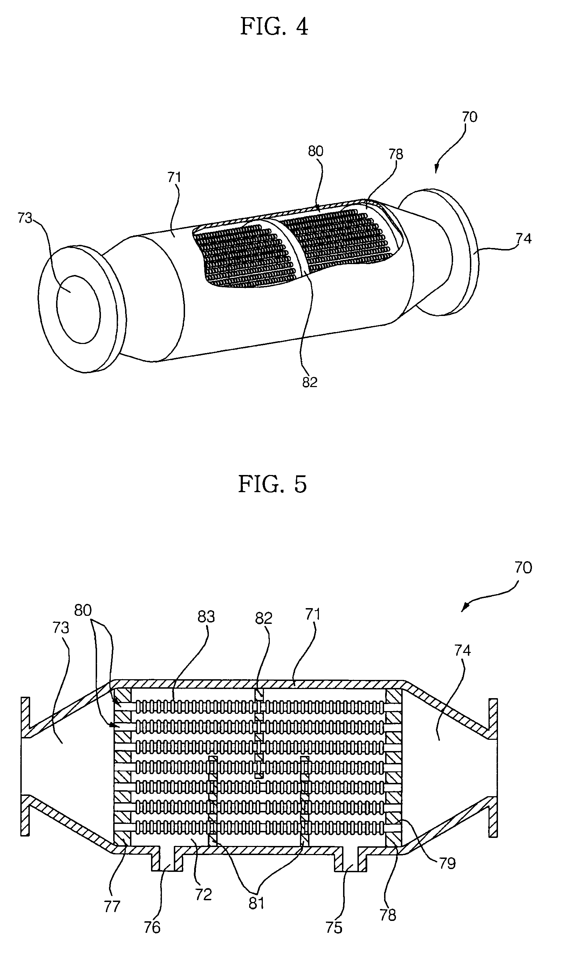

FIG. 3 is a schematic view illustrating a configuration of a cogeneration system according to a first embodiment of the present invention. FIG. 4 is a partially-broken perspective view illustrating an exhaust gas heat exchanger used in the cogeneration system according to the first embodiment of the present invention. FIG. 5 is a cross-sectional view illustrating an inner configuration of the exhaust gas heat exchanger according to the first embodiment of the present invention.

As shown in FIG. 3, the cogeneration system according to the first embodiment of the present invention includes an engine 50 to which fuel is supplied, a generator 51 which is driven by the engine 50 to generate electricity, a cooling water heat exchanger 52 which recovers heat from cooling water used to cool the engine 50, and an exhaust gas heat exchanger 70 which is arranged in an exhaust gas discharge conduit 53 extending from the engine 50 to recover heat from exhaust gas discharged from the engine 50. The cogeneration system also includes a heat transfer line 54 which transfers the recovered cooling water heat and exhaust gas heat to a cooling and heating apparatus 60.

The electricity generated from the generator 51 is used to operate various electronic appliances including the cooling and heating apparatus 60 and illumination devices.

The waste heat generated from the engine 50, that is, the heat generated from the cooling water used to cool the engine 50 and the heat generated from the exhaust gas discharged from the engine 50, is used in the cooling and heating apparatus 60 during a heating operation of the cooling and heating apparatus 60. In order to outwardly discharge the waste heat generated from the engine 50 during a cooling operation of the cooling and heating apparatus 60, the cogeneration system also includes a radiator 57 which includes a heat exchanger 55 and a radiating fan 56.

The cooling and heating apparatus 60 is of a heat pump type so that it is used not only as a cooling apparatus, but also as a heating apparatus, in accordance with reversal of a refrigerant flow in a refrigerant cycle in the cooling and heating apparatus 60. As in a typical heat pump type cooling and heating apparatus, the cooling and heating apparatus 60 includes a compressor 61, a 4-way valve 62, an outdoor heat exchanger 63, an expansion device 64, and an indoor heat exchanger 65.

An air preheating heat exchanger 66 is arranged near the outdoor heat exchanger 63 in order to preheat air supplied toward the outdoor heat exchanger 63, using the waste heat of the engine 50 during the heating operation of the cooling and heating apparatus 60.

The air preheating heat exchanger 66 is connected to the cooling water heat exchanger 52 and exhaust gas heat exchanger 70 via the heat transfer line 54.

The radiator 57 is arranged in a radiating line 58 connected to the heat transfer line 54.

In FIG. 3, reference character "P" designates pumps respectively adapted to pump a heat transfer medium such that the heat transfer medium is circulated through desired lines, and reference character "V" designates a valve adapted to change the flow path of the heat transfer medium between the heat transfer line 54 and the radiating line 58.

As shown in FIGS. 4 and 5, the exhaust gas heat exchanger includes a shell 71, an exhaust gas path which is defined in the shell 71 to guide exhaust gas to pass through the shell 71, and a refrigerant path 72 which is defined in the shell 71 to guide a refrigerant to pass through the shell 71 such that the refrigerant heat-exchanges with the exhaust gas path.

The shell 71 is arranged in the exhaust gas discharge conduit 53 through which the exhaust gas from the engine 50 is discharged. An exhaust gas inlet 73 and an exhaust gas outlet 74 are formed at opposite ends of the shell 71, respectively, such that the exhaust gas inlet 73 and exhaust gas outlet 74 communicate with the exhaust gas discharge conduit 53 to allow the exhaust gas to be introduced into the shell 71 and then to be discharged from the shell 71.

The exhaust gas path includes a plurality of exhaust gas passages respectively defined by exhaust gas discharge tubes 80 which are arranged between the exhaust gas inlet 73 and the exhaust gas outlet 74.

A refrigerant inlet 75 and a refrigerant outlet 76 are formed through a peripheral wall of the shell 71 to allow the refrigerant to be introduced into the shell 71 and then to be discharged from the shell 71.

A first isolation plate 77 and a second isolation plate 78 are arranged at the exhaust gas inlet 73 and the exhaust gas outlet 74, respectively, to isolate the interior of the shell 71 from the exhaust gas inlet 73 and exhaust gas outlet 74, and thus, to define the refrigerant path in the shell 71.

The first and second isolation plates 77 and 78 are fixed to an inner peripheral surface of the shell 71 by welding. A plurality of connecting holes 79 are formed through each of the first and second isolation plates 77 and 78. Opposite ends of each exhaust gas discharge tube 80 are connected to associated ones of the connecting holes 79 of the first and second isolation plates 77 and 78.

A flow guide is arranged in the shell 71 to change the refrigerant path for an enhancement in heat transfer efficiency.

The flow guide includes at least one lower flow guide 81 upwardly protruded from the bottom of the shell 71 in the interior of the shell 71, and at least one upper flow guide 82 downwardly protruded from the top of the shell 71 in the interior of the shell 71.

In the illustrated case, the flow guide includes two lower flow guides 81 and one upper flow guide 82. The lower flow guides 81 are spaced apart from each other in a flow direction of the exhaust gas, and the upper flow guide 82 is arranged between the lower flow guides 81.

A plurality of through holes are formed through each of the lower and upper flow guides 81 and 82, to allow the exhaust gas discharge tubes 80 aligned with the through holes to extend through the through holes, respectively.

Each exhaust gas discharge tube 80 includes a bellows tube portion 83 to be thermally expandable and shrinkable, thereby preventing the exhaust gas discharge tube 80 from being damaged due to thermal deformation thereof caused by the heat of the exhaust gas.

The bellows tube portion 83 has circular pleats arranged in a longitudinal direction of the bellows tube portion 83 to enable the bellows tube portion 83 to be easily extended and shrunken in the longitudinal direction.

The opposite ends of each exhaust gas discharge tube 80 are fitted in associated ones of the connecting holes 79 formed through the first and second isolation plates 77 and 78, respectively, and are fixed to the first and second isolation plates 77 and 78 around the associated connecting holes 79 by welding, respectively.

It is preferred that the portions of each exhaust gas discharge tube 80 to be fitted in the associated connecting holes 79 have a circular cross-section corresponding to that of the connecting holes 79.

Also, it is preferred that each exhaust gas discharge tube 80 be made of steel use stainless (SUS).

Hereinafter, operation of the exhaust gas heat exchanger in the cogeneration system having the above-described configuration according to the first embodiment of the present invention will be described.

Electricity generated from the engine 50 during operation of the engine 50 is supplied to the cooling and heating apparatus 60, and high-temperature exhaust gas discharged from the engine 50 during the operation of the engine 50 passes through the exhaust gas heat exchanger 70 arranged in the exhaust gas discharge conduit 53.

That is, the exhaust gas discharged from the engine 50 is introduced into the shell 71 through the exhaust gas inlet 73 of the shell 71, and is then discharged from the shell 71 through the exhaust gas outlet 74 after passing through the exhaust gas exhaust tubes 80.

During the flow of the exhaust gas, cooling water which is a refrigerant is introduced into the shell 71 through the refrigerant inlet 75. Accordingly, heat exchange occurs in the shell 71 between the cooling water and the exhaust gas discharge tubes 80.

That is, as the cooling water comes into contact with the exhaust gas discharge tubes 80, the cooling water absorbs the heat of the exhaust gas transferred to the exhaust gas discharge tubes 80 through which the exhaust gas passes. As a result, the exhaust gas discharge tubes 80 are cooled by the cooling water.

The cooling water is discharged from the shell 71 through the refrigerant outlet 76 after absorbing heat from the exhaust gas discharge tubes 80, and is supplied to the air preheating heat exchanger 66 via the heat transfer line 54.

Thus, the cooling water preheats outdoor air introduced into the cooling and heat apparatus 60 while passing through the air preheating heat exchanger 66, using the heat absorbed from the exhaust gas discharge tubes 80, in order to achieve an enhancement in heating capability.

Meanwhile, each exhaust gas discharge tube 80 has an increased thermal contact area contacting the cooling water by virtue of the thermally expandable and shrinkable bellows tube portion 83 included in the exhaust gas discharge tube 80. Accordingly, an enhancement in thermal efficiency is achieved.

Since repeated thermal expansion and shrinkage of each exhaust gas discharge tube 80 is enabled, it is possible to reduce damage of the exhaust gas discharge tube 80.

Since the first and second isolation plates 77 and 78 are fixed to the inner peripheral surface of the shell 71 by welding, it is possible to effectively prevent leakage of the cooling water.

When the cooling and heating apparatus 60 operates in cooling mode, the flow path of the cooling water is changed to communicate with the radiating line 58 connected to the heat transfer line 54 because it is unnecessary to supply waste heat. In this case, the waste heat is discharged to the atmosphere through the radiator 57, or is supplied to and used in a water heater, a hot water supplier, or other systems.

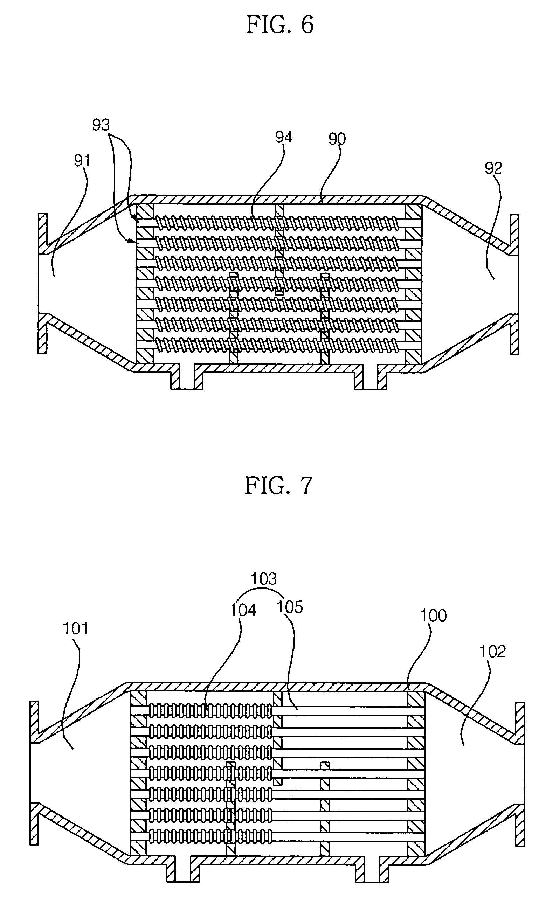

FIG. 6 is a cross-sectional view illustrating an inner configuration of an exhaust gas heat exchanger in a cogeneration system according to a second embodiment of the present invention.

As shown in FIG. 6, the exhaust gas heat exchanger according to the second embodiment of the present invention includes a shell 90 which is provided, at opposite ends thereof, with an exhaust gas inlet 91 and an exhaust gas outlet 92, respectively, and an exhaust gas discharge tubes 93 which are arranged in the shell 90 to connect the exhaust gas inlet 91 and exhaust gas outlet 92, thereby defining an exhaust gas path. Each exhaust gas discharge tube 93 includes a bellows tube portion 94 to be thermally expandable and shrinkable, thereby preventing the exhaust gas discharge tube 90 from being damaged due to thermal deformation thereof caused by the heat of the exhaust gas. The bellows tube portion 94 has a pleat extending spirally in a longitudinal direction of the bellows tube portion 94 to enable the bellows tube portion 94 to be easily extended and shrunken in the longitudinal direction, and to achieve an enhancement in the heat transfer of the bellows tube portion 94 with cooling water. Other configurations of the exhaust gas heat exchanger according to the second embodiment of the present invention are identical to those of the first embodiment of the present invention, so no detailed description thereof will be given.

FIG. 7 is a cross-sectional view illustrating an inner configuration of an exhaust gas heat exchanger in a cogeneration system according to a third embodiment of the present invention.

As shown in FIG. 7, the exhaust gas heat exchanger according to the third embodiment of the present invention includes a shell 100 which is provided, at opposite ends thereof, with an exhaust gas inlet 101 and an exhaust gas outlet 102, respectively, and an exhaust gas discharge tubes 103 which are arranged in the shell 100 to connect the exhaust gas inlet 101 and exhaust gas outlet 102, thereby defining an exhaust gas path. Each exhaust gas discharge tube 103 includes two portions, namely, a bellows tube portion 104 and a constant-diameter cylindrical tube portion 105. Other configurations of the exhaust gas heat exchanger according to the third embodiment of the present invention are identical to those of the first embodiment of the present invention, so no detailed description thereof will be given.

In this case, it is preferred that the bellows tube portion 104 have circular pleats arranged in a longitudinal direction of the bellows tube portion 104, and be provided at a portion of the exhaust gas discharge tube 103 exposed to a higher temperature than the remaining portion of the exhaust gas discharge tube 103.

Since the exhaust gas discharged from the engine 50 passes through the exhaust gas inlet 101, each exhaust gas discharge tube 103, and exhaust gas outlet 102, in this order, the temperature of the exhaust gas inlet 101, into which the exhaust gas from the engine 50 is first introduced, is higher than that of the exhaust gas outlet 102. Accordingly, the bellows tube portion 104 is provided at the portion of the exhaust gas discharge tube 103 arranged at the side of the exhaust gas inlet 101, and the constant-diameter cylindrical tube portion 105 is provided at the portion of the exhaust gas discharge tube 103 arranged at the side of the exhaust gas outlet 102.

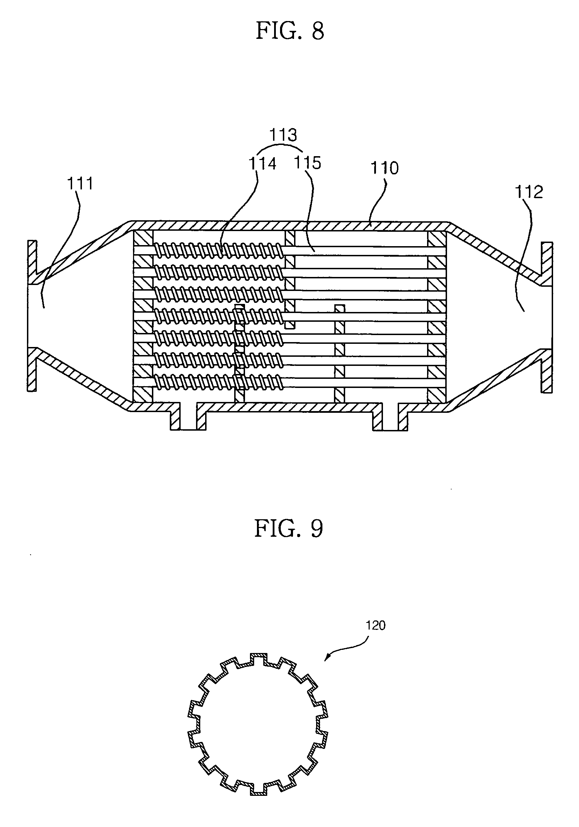

FIG. 8 is a cross-sectional view illustrating an inner configuration of an exhaust gas heat exchanger in a cogeneration system according to a fourth embodiment of the present invention.

As shown in FIG. 8, the exhaust gas heat exchanger according to the fourth embodiment of the present invention includes a shell 110 which is provided, at opposite ends thereof, with an exhaust gas inlet 111 and an exhaust gas outlet 112, respectively, and an exhaust gas discharge tubes 113 which are arranged in the shell 110 to connect the exhaust gas inlet 111 and exhaust gas outlet 112, thereby defining an exhaust gas path. Each exhaust gas discharge tube 113 includes two portions, namely, a bellows tube portion 114 and a constant-diameter cylindrical tube portion 115. The bellows tube portion 114 has a pleat extending spirally in a longitudinal direction of the bellows tube portion 114. Other configurations of the exhaust gas heat exchanger according to the fourth embodiment of the present invention are identical to those of the third embodiment of the present invention, so no detailed description thereof will be given.

FIG. 9 is a cross-sectional view illustrating an inner configuration of an exhaust gas heat exchanger in a cogeneration system according to a fifth embodiment of the present invention.

As shown in FIG. 9, the exhaust gas heat exchanger according to the fifth embodiment of the present invention has the same configuration as that of the first embodiment of the present invention, except that the exhaust gas heat exchanger includes a plurality of exhaust gas discharge tubes 120 each having a bellows tube portion which is formed at at least a portion of the exhaust gas discharge tube 120, and is provided with straight pleats extending in a longitudinal direction of the exhaust gas discharge tube 120 while being arranged in a circumferential direction of the exhaust gas discharge tube 120. Accordingly, no further detailed description will be given of the exhaust gas heat exchanger according to the fifth embodiment of the present invention.

The above-described exhaust gas heat exchanger in the cogeneration system according to the present invention provides various effects.

That is, since at least a portion of each exhaust gas discharge tube in the exhaust gas heat exchanger according to the present invention has a bellows tube structure such that the exhaust gas discharge tube is thermally expandable and shrinkable, it is possible to prevent the exhaust gas discharge tube from being damaged due to repeated thermal expansion and shrinkage thereof caused by hot exhaust gas passing through the exhaust gas discharge tube. Accordingly, an enhancement in durability is achieved.

Since each exhaust gas discharge tube includes a bellows tube portion, the contact are of the exhaust gas discharge tube contacting cooling water is increased, thereby achieving an enhancement in heat transfer efficiency.

Since each exhaust gas discharge tube is thermally expandable and retractable, the first and second isolation plates can be fixed to the inner peripheral surface of the shell by welding. Accordingly, it is possible to effectively prevent leakage of cooling water.

In addition, it is possible to dispense with an O-ring which is required in conventional cases. Accordingly, it is possible to use the exhaust gas heat exchanger under a higher temperature condition, and thus, to achieve an enhancement in reliability.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An exhaust gas heat exchanger for a cogeneration system comprising:
a shell (71);
an exhaust gas path which is defined in the shell (71) to guide exhaust gas to pass through the shell (71); and
a refrigerant path (72) which is defined in the shell to guide a refrigerant to pass through the shell (71) such that the refrigerant heat-exchanges with the exhaust gas path,
wherein the exhaust gas path includes exhaust gas passages respectively defined by exhaust gas discharge tubes (80, 93, 103, 113, or 120) each including a bellows tube portion (83, 94, 104, or 114) formed at at least a portion of the exhaust gas discharge tube to enable the exhaust gas discharge tube to be thermally expanded and shrunken.

2. The exhaust gas heat exchanger according to claim 1, wherein the bellows tube portion (83) is longitudinally pleated in a longitudinal direction of the exhaust gas discharge tube (80).

3. The exhaust gas heat exchanger according to claim 1, wherein the bellows tube portion is pleated in a circumferential direction of the exhaust gas discharge tube (120).

4. The exhaust gas heat exchanger according to claim 2, wherein the bellows tube portion (83) includes circular pleats.

5. The exhaust gas heat exchanger according to claim 2, wherein the bellows tube portion (94) includes a spiral pleat.

6. The exhaust gas heat exchanger according to claim 4 or 5, further comprising:
an exhaust gas inlet (73) and an exhaust gas outlet (74) respectively formed at opposite ends of the shell (71) to allow the exhaust gas to pass through the shell (71),
wherein the exhaust gas discharge tubes connect the exhaust gas inlet (73) and the exhaust gas outlet (74).

7. The exhaust gas heat exchanger according to claim 6, wherein:
each of the exhaust gas discharge tubes (103) further includes a constant-diameter cylindrical tube portion (105);
the bellows tube portion (104) is arranged toward the exhaust gas inlet (101); and
the constant-diameter cylindrical tube portion (105) is arranged toward the exhaust gas outlet (102).

8. The exhaust gas heat exchanger according to any of claims 1 to 7, further comprising:
a refrigerant inlet (75) and a refrigerant outlet (76) which are formed through a peripheral wall of the shell (71).

9. The exhaust gas heat exchanger according to claim 8, further comprising:
a first isolation plate (77) and a second isolation plate (78) which are arranged in the shell (71) to isolate the exhaust gas inlet (73) and the exhaust gas outlet (74) from each other, thereby defining the refrigerant path (72).

10. The exhaust gas heat exchanger according to claim 8 or 9, further comprising:
at least one flow guide adapted to change the refrigerant path (72).

11. A method of providing an exhaust gas heat exchange for a cogeneration system comprising method steps corresponding to the features of any of claims 1 to 10.
